# EUROPEAN PATENT APPLICATION

(11) **EP 2 166 030 A1**
(43) Date of publication of application: **24.03.2010**
(21) Application number: 08164689.5
(22) Date of filing: 19.09.2008
(51) Int. Cl.: C08G 67/02

(54) **Re-mouldable cross-linked resin, a composition, a substituted furan, and processes for preparing the same**

(71) Applicant: Rijksuniversiteit Groningen, 9712 CP Groningen (NL)
(72) Inventor: The designation of the inventor has not yet been filed
(74) Representative: Hatzmann, Martin

(57) **Abstract**

The invention relates to re-mouldable cross-linked resins and methods for preparing them. Provided is, *inter alia*, a re-mouldable cross-linked resin comprising polymer chains which are connected to one another via Diels-Alder adducts obtainable from a dienophile and a substituted furan wherein the substituted furan is obtainable by reacting an amino furan compound with a copolymer of carbon monoxide and an olefinically unsaturated compound.

## Description

The invention relates to a re-mouldable cross-linked resin comprising polymer chains which are connected to one another via Diels-Alder adducts obtainable from a dienophile and a substituted furan. The invention also relates to a composition which is suitable for the preparation of the re-mouldable cross-linked resin. The invention also relates to the substituted furan and to processes for preparing the re-mouldable cross-linked resin and the substituted furan.

Conventional thermoset resin compositions are generally low-molecular weight compounds which are converted into a cross-linked high molecular weight resin by a curing reaction. Conventional thermoset resins are widely used in view of their generally advantageous properties, such as easy mouldability into shaped objects of the resin in the uncured state and the high strength and rigidity of the resins in the cured state. On the other hand, as the curing reactions are irreversible, the conventional thermoset resins can not be re-moulded after they have been cured. This implies that they lack recycleability, which is increasingly felt as a disadvantage.

US-A-5641856 discloses a re-mouldable cross-linked resin comprising polymer chains which are cross-linked via Diels-Alder adducts obtained from a dienophile and a diene, which is a 2,5-dialkyl substituted furan. The Diels-Alder adducts reverse to the dienophile and the diene when the resins are heated at an elevated temperature (retro Diels-Alder reaction). Hence, upon heating at elevated temperature the cross-links disappear, allowing the resin to be re-moulded so that these resins can combine recycleability with the advantageous properties of the conventional thermoset resins.

In specific embodiments of the disclosures in US-A-5641856, the 2,5-dialkyl substituted furan is obtained by furanising a copolymer of carbon monoxide and an olefinically unsaturated compound. The process of furanising the copolymer employs an acidic dehydration compound or an acidic catalyst and a diluent. The process is tedious as the furanised copolymer needs to be separated from remnants of the acidic dehydration compound or catalyst and from the diluent. Compounds containing furan rings are sensitive to acids, and such sensitivity decreases the stability of the resin and related compositions, which may result, for example, in a reduction of the re-mouldability of the resin.

The present invention provides a re-mouldable cross-linked resin comprising polymer chains which are connected to one another via Diels-Alder adducts obtainable from a dienophile and a substituted furan wherein the substituted furan is obtainable by reacting an amino furan compound with a copolymer of carbon monoxide and an olefinically unsaturated compound.

The present invention also provides a composition which is suitable for the preparation of a re-mouldable cross-linked resin which composition comprises a dienophile cross linking agent and a substituted furan wherein the substituted furan is obtainable by reacting an amino furan compound with a copolymer of carbon monoxide and an olefinically unsaturated compound.

The present invention also provides a process for preparing a re-mouldable cross-linked resin which process comprises reacting a dienophile cross linking agent with a substituted furan wherein the substituted furan is obtained by reacting an amino furan compound with a copolymer of carbon monoxide and an olefinically unsaturated compound.

The present invention also provides a substituted furan which is obtainable by reacting an amino furan compound with a copolymer of carbon monoxide and an olefinically unsaturated compound.

The present invention also provides a process for preparing a substituted furan which process comprises reacting an amino furan compound with a copolymer of carbon monoxide and an olefinically unsaturated compound.

In accordance with the present invention, the substituted furan is obtainable by reacting an amino furan compound with a copolymer of carbon monoxide and an olefinically unsaturated compound. The resulting functionalised copolymer is reacted with a dienophile cross-linking agent to form the re-mouldable cross-linked resin. It is an unexpected advantage that the functionalisation reaction, i.e. the reaction involving the amino furan compound, can be carried out under mild conditions, and in the absence of acidic dehydration compounds or acidic catalysts and that the reaction can be carried out in bulk, i.e. in the (substantial) absence of a diluent. It is also unexpected, that the functionalisation reaction can easily lead to the incorporation a relatively large number of furan rings in the copolymer, such that it is easy to accomplish the desired degree of cross-linking when forming the re-mouldable cross-linked resin. The resulting re-mouldable cross-linked resins therefore outperform the re-mouldable cross-linked resins known from US-A-5641856 in one or more properties. For example, improvements can be found in stability, such as re-mouldability or the number of times the cross-linked resin may be re-moulded, in temperature or speed of processing during moulding and re-moulding, in healing ability or in one or more mechanical properties, such as flexural strength, flexural modulus, impact resistance, hardness, glass transition temperature, and dynamic mechanical properties (storage modulus G', loss modulus G", tan δ). The present invention also provides additional flexibility in the design and properties of the re-mouldable cross-linked resin, because when employing a defined copolymer of carbon monoxide and an olefinically unsaturated compound and a defined dienophile structural variation may be introduced by simply varying the structure of the amino furan compound. Varying the structure of the amino furan compound may involve variations in the structure of the connecting moiety of the amino furan compound (cf. hereinafter) and variations in the substitution pattern of the furan ring. In particular, this additional flexibility offers a possibility to steer the temperature at which the Diels-Alder reaction and retro Diels-Alder reaction may take place, which determines to a large extend the temperature window for the production and recycle (re-moulding) of the re-mouldable cross-linked resin and the temperature window for its application or end-use.

Copolymers of carbon monoxide and an olefinically unsaturated compound are known per se. Such polymers comprise 1,4-dicarbonyl entities in their polymer chains, which are to be reacted with the amino furan compound. The copolymer can be prepared by palladium catalysed polymerisation using the methods known from, for example, EP-A-121965, EP-A-181014, EP-A-322018, EP-A-372602, EP-A-516238, E Drent et al. (Chem. Rev. 1996 (96) p. 663), US-A-5225523 and W.P. Mul et al. (Inorg. Chim. Acta 2002 (327) p. 147). The polymers so prepared are alternating copolymers, i.e. copolymers of which the polymer chains contain monomer units originating in carbon monoxide (i.e. carbonyl units) and monomer units originating in the olefinically unsaturated compounds in an alternating arrangement, so that every fourth carbon atom of the polymer chains belongs to a carbonyl group. The molecular weight of the copolymers can suitably be varied by varying the polymerisation temperature; viz. polymers with a relatively low molecular weight are prepared at a relatively high temperature. Alternative copolymers of carbon monoxide and an olefinically unsaturated compound may be random copolymers, i.e. copolymers of which the polymer chains contain said monomer units in a random order. The latter copolymers may be prepared by radical initiated copolymersation using the methods known from, for example, US-A-2495286 and US-A-4024326.

The olefinically unsaturated compounds may preferably be hydrocarbons, but they may also contain heteroatoms, such as in vinyl acetate, methyl vinyl ether, ethyl acrylate and N-vinylpyrrolidone. The olefinically unsaturated hydrocarbons are suitably α-olefins, in particular those having up to 6 carbon atoms and more in particular those having a straight carbon chain, for example ethene, propene, 1-butene, 1-pentene and 1-hexene. Mixtures of olefinically unsaturated hydrocarbons may be employed. Mixtures of ethene and olefinically unsaturated hydrocarbons having from 3 to 6 carbon atoms are preferred, in particular those in which the molar fraction of ethene is up to 80 %, preferably up to 60 %, for example 30 % or 50 %, relative to the total of the olefinically unsaturated hydrocarbons. Propene and ethene/propene mixtures are most preferred.

When the olefinically unsaturated compounds are α-olefins having at least three carbon atoms, the α-olefins may be incorporated in the copolymer in a regio-irregular fashion or in a regio-regular fashion. For the alternating copolymer, such regio-regularity is dependent on the choice of polymersation catalyst. The regio-irregular fashion is preferred, as it will lead to a lower viscosity of the copolymer, and its reaction product with the amino furan compound.

The molecular weight of the copolymer of carbon monoxide and an olefinically unsaturated compound is not material to the invention and may therefore be selected between wide limits according to the type of application and the method and conditions of (re)moulding the cross-linked resin envisaged. A low viscosity is advantageous when reinforced or filled composites, in particular glass reinforced composites, are prepared, in view of good wetting of the reinforcement or the filler. A low viscosity is also advantageous, for example, when the resin is used for moulding objects having an intricate shape or when it is used as a coating material or as an adhesive. A low viscosity during the (re-)moulding can be accomplished, for example, by selecting a polymer with a low molecular weight or a low molecular weight dienophile. Good results have been obtained with a copolymer of carbon monoxide and an olefinically unsaturated compound having a number average molecular weight in the range of from 500 to 100,000, preferably in the range of from 800 to 25,000, more preferably in the range of from 1,000 to 10,000.

The amino furan compound comprises a primary amino group (NH₂), a furan ring and a connecting moiety, which is a moiety connecting the amino group with the furan ring. The amino furan compound may be depicted by the general formula

NH₂- A-F,

wherein A represents the connecting moiety and F represents the furan ring, including any of its further substituents, if present. The connecting moiety may be attached to the furan ring at any position of the furan ring, however, the 2-position is preferred (the oxygen atom being the 1-position of the furan ring). The furan ring may or may not be substituted, in addition to the substitution provided by the connecting moiety. Such substituents may be selected from, for example, hydrocarbyl groups, in particular alkyl and aryl groups. Electron donating substituents may be preferred substituents, for example alkoxy groups like methoxy and ethoxy, alkyl groups, like methyl, ethyl and isopropyl, and silyl groups like trimethylsilyl. The number of such substituents may be 1, 2 or 3, and the substituents may occupy any position of the furan ring which is not occupied by the connecting moiety.

The connecting moiety may be a chemical bond, or it may be a bivalent organic radical. Preferably the connecting moiety comprises carbon and hydrogen atoms, and optionally, in addition, heteroatoms. Typically, the connecting moiety is a hydrocarbyl group, in particular having up to 10 carbon atoms, in particular up to 6 carbon atoms. Preferably, the connecting moiety is an alkylene group, in particular having the carbon atoms are arranged in a straight chain connecting the amino group and the furan ring. For example, the connecting moiety may be selected from 1,2-ethylene ( CH₂CH₂-), 1,3-propylene ( CH₂ CH₂ CH₂ ), 2,2-propylene (C(CH₃)₂ ), 1,4-butylene ( CH₂ CH₂ CH₂ CH₂ ), and 1,4-phenylene groups. A preferred connecting moiety is a methylene group ( CH₂ ).

Preferred amino furan compounds are 2-(aminomethyl)-furan (also referred to as furfurylamine) and 2-(2-aminoethyl)-furan.

By reaction of the amino furan compound with 1,4-dicarbonyl entities present in the polymer chains of the copolymer of carbon monoxide and an olefinically unsaturated compound, amino groups and 1,4-dicarbonyl entities are converted to N-substituted pyrrole rings positioned within the polymer chain. The N-substituent may be depicted by the general formula

-A-F,

wherein A and F are as defined hereinbefore. The reaction may be carried out employing mild reaction conditions, for example a temperature in the range of from 20 to 200 °C, preferably in the range of from 30 to 150 °C. The molar ratio of the copolymer and the amino furan compound may be selected in accordance of the desired degree of functionalisation of the copolymer. Typically the molar ratio is in the range of from 0.02 to 1, more typically in the range of from 0.1 to 0.9, based on number of amino groups employed relative to the number of 1,4-dicarbonyl groups in the copolymer employed. The number of 1,4-dicarbonyl groups may generally be determined by using elemental analysis and ¹H-NMR or ¹³C-NMR spectroscopy, whereas in the case of the alternating copolymers the number of 1,4-dicarbonyl groups may also be established as amounting to half the stoichiometric number of the carbonyl groups. At the lower molar ratios, the reaction proceeds easily to completion, i.e. with the amino groups depleted. The reaction may be carried out in bulk, i.e. in the absence or substantial absence of a diluent. In this context, the expression "substantial absence" may mean that the quantity of diluent may be at most 0.1 g per g of copolymer, in particular at most 0.03 g per gram of copolymer, more in particular at most 0.01 g per g of copolymer. When the copolymer is a solid, the bulk reaction may be carried out in suspension. On the other hand, when the copolymer is a solid, the presence of a diluent may facilitate the reaction, in which case any diluent capable of dissolving the copolymer and the amino furan compound may suitably be employed, in particular protic organic diluents for example alcohols having at most 4 carbon atoms. The amount of diluent may be up to 1 g per g of copolymer, suitably up to 0.5 g per g of copolymer. Reaction times are suitably in the range of from 1 to 48 hours, more suitably in the range of from 2 to 24 hours. It is preferred to remove remnant, if any, of the amino furan compound after completion of the reaction time, typically by washing with a suitable washing liquid, such as water. Remnants of the diluent and/or the washing liquid may be removed by evaporation.

The precise nature of the dienophile is not critical, as long as the Diels-Alder adduct has such a thermal stability that the cross-linked resin is re-mouldable. The skilled person will be able to determine by routine experimentation whether or not a dienophile will meet the criterion of re-mouldability, in particular in respect of the temperature he wishes to apply in re-moulding the cross-linked resin. Usually the minimum temperature above which the re-mouldable cross-linked resin will be (re)moulded depends on the maximum temperature requirements for the end-use application of the re-mouldable cross-linked resin, or vice-versa. The (re-)moulding is suitably carried out at a temperature above 80 °C, preferably above 110 °C, more preferably above 140 °C. For reasons of cost-effectiveness and practical processing it is desired that the temperature at which the (re-)moulding takes place is, for example, below 300°C, in particular below 250°C, more in particular below 220°C.

Suitable dienophiles are, for example, alkynes having electron withdrawing groups to both sides of the ethyne moiety, such as ester and keto groups. Examples are mono- and diesters of butynedioic acid (i.e. acetylenedicarboxylic acid) and substituted but-2-yne-1,4-diones. Other suitable dienophiles are compounds which contain a but-2-ene-1,4-dione moiety included in a 5- or 6-membered ring, in particular compounds which contain a dienophile of the general formula 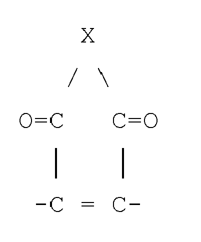 wherein X denotes O, S, N- or P-, and wherein at least one of the free valencies is occupied by a bridging group which connects the dienophile with another dienophile as described herein, and the remaining free valencies, if any, are occupied by lower alkyl or acyl substituents, or, preferably, hydrogen atoms. The nature of the said bridging group will be elaborated further hereinafter. The lower alkyl substituents suitably contain up to 4 carbon atoms and are, for example, methyl or ethyl groups. Dienophiles of this general formula are preferably cyclic derivatives of maleic anhydride or, in particular, maleimide (i.e. X denotes O or, in particular, N-).

The dienophile cross-linking agent comprises in its molecular structure two or more dienophiles as described hereinbefore. A practical maximum of the number of dienophiles in the molecular structure is typically 10, more typically 5. In the cross-linking agent the dienophiles may be connected to one another by one or more bridging groups. For example, four dienophiles may be connected to one another by a quadri-valent bridging group, or by three bi-valent bridging groups. The more dienophiles in the molecular structure, the higher the glass transition temperature of the re-mouldable cross-linked resin may be. However, it may be sufficient and more simple that a cross-linking agent is used in which there are two or three dienophiles in the molecular structure, in particular maleimido groups, which dienophiles may be connected to one another by bi- or tri-valent bridging groups. Dienophiles may also be connected to one another by means of a chemical bond.

Both the molecular weight and the chemical nature of the bridging group may be varied to a large extent. Such variations of the cross-linking agent can lead to re-mouldable cross-linked resins covering a range of mechanical properties. The bridging group may be organic, and it may contain only carbon atoms in the bridge but it is also possible that it contains, in addition, heteroatoms in the bridge, such as oxygen, silicon or nitrogen atoms. The bridging group may be flexible or rigid.

The bridging group may be polymeric, for example, a poly(alkylene oxide) or a polysiloxane, typically having a number average molecular weight of, say, more than 300, or more than 500. The resulting re-mouldable cross-linked resins may be rubbery in nature.

On the other hand, low-molecular weight bridging groups may have a molecular weight of, for example, below 500, in particular below 300, or may have up to 20 carbon atoms in each of the connecting bridges. The low-molecular weight bridging groups, in particular cycloaliphatic and aromatic bridging groups, tend to provide re-mouldable cross-linked resins which are relatively hard and strong, and have a relatively high glass transition temperature. Examples of cycloaliphatic and aromatic low-molecular weight bridging groups are groups containing a (nor)bornane skeleton in the bridge, 1,3-phenylene groups, 1,4-phenylene groups, and groups of the following formulae: Φ CH2 Φ, Φ O Φ O Φ, Φ O Φ SO2 Φ O Φ, CH2 O CO Φ CO O CH2 , and Φ C(CH3)2 Φ, wherein Φ denotes, independently, a 1,3- or 1,4-phenylene group. Other suitable bivalent bridging groups are non-cyclic aliphatic (alkylene) and oxycarbonyl (ester) groups and combinations thereof.

Suitable cross-linking agents are, for example, the bis-maleimides of hydrazine, 1,3-diaminobenzene, 2,4-diaminotoluene, bis(4-aminophenyl)methane, hexamethylenediamine, and dodecamethylenediamine. A mixture of cross-linking agents may be applied.

The quantity of Diels-Alder adducts present in the re-mouldable cross-linked resin depends on the quantity of furan rings and the quantity of dienophile present in the composition from which the re-mouldable cross-linked resin is prepared. The skilled person will appreciate that a certain minimum quantity of Diels-Alder adducts may be needed to be present to effect that the re-mouldable cross-linked resin is a solid material below the temperature at which the Diels-Alder adducts reverse to the furan and the dienophile. It will also be appreciated that this minimum quantity depends on the molecular weight and the type of copolymer, and on the number of dienophiles per molecule (i.e. functionality) of the cross-linking agent. A low molecular weight of the polymer will effect that a higher quantity of Diels-Alder adducts may be needed. The number of Diels-Alder adducts may be lower when a cross-linking agent with higher functionality is employed. Generally, good results can be achieved by using an alternating copolymer having a number average molecular weight above 1000, which is reacted on average with at least 4 molecules of the amino furan compound per copolymer molecule. Preferably, an alternating copolymer is used having a number average molecular weight above 1200, which is reacted on average with at least 8 molecules of the amino furan compound per copolymer molecule. The molar ratio of the furan rings to dienophiles present in the composition from which the re-mouldable cross-linked resin is prepared may typically be in the range of from 10:1 to 1:5, more typically from 5:1 to 1:2. Generally, good results may be obtained when the molar ratio of the furan rings to dienophiles amounts to 1:1.

Reinforcement and (conductive) fillers may be present in the re-mouldable cross-linked resins of this invention, for example in a quantity of up to 40 % by weight, relative to the weight of the resulting composition. Other compounds which may be present are, for example, radical scavengers, such as phenolic antioxidants and hydroquinones; buffering stabiliser systems, such as buffers having a pH range of 2 - 7 (when measured in water at 20°C); UV stabilisers; processing aids, such as release agents; and pigments.

The re-mouldable cross-linked resins according to this invention may be prepared, for example, by mixing the appropriate components at ambient temperature, heating the obtained mixture and moulding into the desired shape. The preparation may conveniently be carried out in an extruder. Some or all components may be fed separately, in particular when one component is a solid and another component is a liquid. By feeding a solid component or component mixture at a point which is positioned up-stream to the point of feeding a liquid component or component mixture, the solid may liquefy at the point where it is mixed with the liquid.

For re-moulding of the re-mouldable cross-linked resin it is generally sufficient to bring the resin at a temperature sufficiently high to convert it into a liquid, to mould the obtained liquid into the desired shape and to cool to a temperature which is sufficiently low to solidify the resin. If desired, the resin may be shredded before heating. If desired, fresh components may be added during the re-moulding process.

Suitable moulding and re-moulding techniques include extrusion, coextrusion (in particular of a soft material onto a hard material), compression moulding, injection moulding, resin transfer moulding, filament winding, pultrusion and spraying. Repairing of mouldings and welding and can very suitably be accomplished in an analogous manner.

The time needed to convert the re-mouldable cross-linked resin into a liquid, and vice versa, is generally short. Frequently, this time is shorter than the time needed for the transfer of heat of reaction of the Diels-Alder or the retro Diels-Alder reaction. It may be desirable to apply systems which decrease the cooling rate in situations that the heat transfer rate is relatively high, in order to allow time for the Diels-Alder reaction to proceed sufficiently to completion.

The re-mouldable cross-linked resins of this invention may be used in applications in which conventional thermoset resins are used, for example as a pre-preg, a sheet moulding compound, or a bulk moulding compound. Further applications are conceivable, for example, as temporary mould or structure, such as a removable kernel in foundries; in disposable goods; as ink or toner; as a (conductive) solder; as a repair material; in coating, in particular high-gloss seamless coating; in thermo reversible gels; as processing aids, such as in poly(vinyl chloride); as adhesive; in bitumen; as (rigid) foam; as electrical isolation material; and as fusible joint or sealant.

The invention is further illustrated by means of the following examples. The examples employed alternating copolymers synthesized according to E Drent et al. (Chem. Rev. 1996 (96) p. 663), US-A-5225523 and W.P. Mul et al. (Inorg. Chim. Acta 2002 (327) p. 147). These alternating copolymers were co- and ter-polymers of carbon monoxide, ethylene, and propylene, with 0% ethylene (PK0, number average molecular weight 1680), 30% ethylene (PK30, number average molecular weight 3970), and 50% ethylene (PK50, number average molecular weight 5350) (based on the total olefin content). Other chemicals were purchased and used as received. Examples 3-7 were based on the use of 1,1'-(methylenedi-1,4-phenylene)bis-maleimide (which may also be referred to as bis(4-maleimidophenyl)methane) as the dienophile cross-linking agent, whereas Examples 8-12 are based on the use of N, N'-(1,3-phenylene)dimaleimide as the dienophile cross-linking agent. Dynamic mechanical analyses were conducted on a Rheometrics scientific solid analyzer (RSA II) under air environment using dual cantilever mode at an oscillation frequency of 1 Hz at a heating rate of 5 °C/minute with the specimen size of 6 mm in width, 1.4 mm in thickness, and 54 mm in length. 3-point bending test was performed on a 4301 Instron machine using a 1 kN power sensor at a crossing head speed of 1 mm/minute with the specimen size of 12.7 mm in width, 4 mm in thickness, and 64 mm in length. At least 8 specimens of every formulation for 3-point bending were tested with the standard deviation of fracture load less than 0.2 kN. The fracture surface of the samples after 3-point bending was examined by scanning electron microscopy (SEM) (JSM-6320 instrument). The samples were sputtered with Pt/Pd prior to SEM observation. The specimens for 3-point bending were prepared by compression moulding of the cross-linked PK-furan into rectangular bars at 120 °C for 20 minutes under a pressure of about 4 MPa, followed by the thermal treatment at 50 °C for 24 hours in an oven.

### Legends to the figures

Figure 1. NMR tube reactions between copolymers (PK0, PK30, and PK50) and furfurylamine at 50 °C: furfurylamine conversion, determined by ¹H-NMR.
Figure 2. DMA analysis of (a) the cross-linked PK50f-1 as a function of I_{ma/fur}; (b) the cross-linked PK50f-1, PK50f-2, and PK30f at I_{ma/fur}=1.
Figure 3. (a) dynamic mechanical properties in response to continuous heating cycle scanning for the cross-linked PK50f-1 at I_{ma/fur} = 1; (b) dynamic mechanical properties of the sample of (a) after heat treatment at 50°C for 24 hours.
Figure 4. (a) Representative load to displacement behaviour of the original and healed samples (PK50f-1 at I_{ma/fur} of 1, 0.75, and 0.5); (b) Representative load to displacement behaviour of the samples (PK50f-1 at I_{ma/fur} =0.75) upon multiple healing cycles.

### Experimental Section

### EXAMPLE 1 - Furan functionalisation of alternating copolymers

The reaction between copolymers (80 mg) and furfurylamine (in equimolar ratio between the 1,4-di-carbonyl groups of the copolymers and the amino groups) was first carried out in CDCl₃ at 50 °C for 12 hours in an NMR tube. The progress of the reaction was monitored with ¹H-NMR spectroscopy.

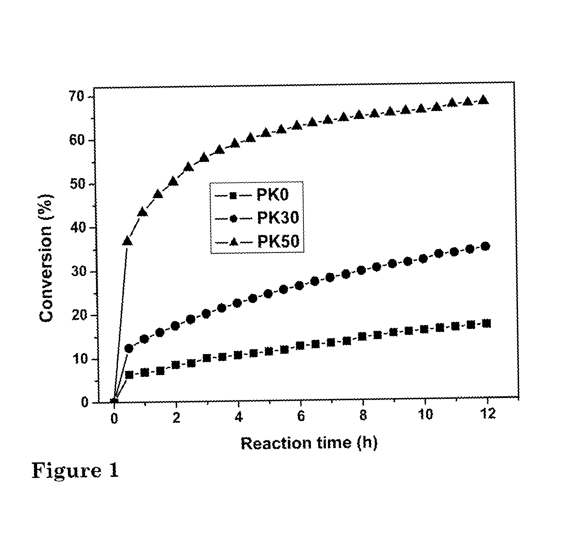

Using the intensity ratio of the -CH₂- peak of furfurylamine before and after reaction, the reaction conversion of furfurylamine are shown as a function of reaction time in Figure 1. It appeared that the reaction for the copolymers with furfurylamine can easily take place even under mild condition (50 °C). After 12 hours reaction time the conversions reached 17.5% (PK0), 35% (PK30), and 68% (PK50), respectively. FTIR spectra of copolymers (PK50) before and after chemical modifications demonstrated the presence of pyrrole rings in the backbone and the bearing of furan rings at the side chain for the furan-functionalized copolymers.

### EXAMPLE 2 - Furan functionalisation of alternating copolymers

The functionalisation of the copolymers with furfurylamine was also carried out in the bulk in a sealed 250 ml round bottom glass reactor with a reflux condenser, a U-type anchor impeller, and an oil bath for heating. After the copolymers (40 g) were preheated to the liquid state at the employed reaction temperature (100 °C), furfurylamine was added dropwise into the reactor in the first 10 minutes. The stirring speed was set at a constant value of 500 rpm and the employed reaction time was 4 hours. The conversion of furfurylamine was determined by ¹H-NMR. The resulting polymers (after modifications) were washed several times with de-ionized Milli-Q water to remove unreacted furfurylamine. After filtering and freeze-drying, light brown polymers were obtained as the final products (PK-furan).

The bulk reactions between copolymers and furfurylamine were studied at 100 °C using a reaction time of 4 hours while varying the amine/di-ketone ratio (I_{NH2/di-CO}) and the ethylene content of the copolymers. The conversion data for furfurylamine (X_{NH2}) and carbonyl groups (X_{CO}) are shown in Table 1. All amine conversions with PK50 proceeded exceedingly well to 98 % for I_{NH2/di-CO}=0.8 and 100 % for I_{NH2/di-CO} of 0.6, 0.4, and 0.2, respectively. It can be seen that the degree of furan functionality can simply be tuned by varying the I_{NH2/di-CO}. With respect to the effect of ethylene content of the copolymers, amine conversions of 75% and 62% for PK30 and PK0 were obtained at the applied reaction conditions, respectively, which also indicated that a higher ethylene content resulted in higher conversion values.

**Table 1. Conversion data of furfurylamine (X_{NH2}) and carbonyl groups of copolymers (X_{CO}) as a function of I_{NH2/di-CO} for different types of copolymers (reaction temperature 100 °C, reaction time 4 hours).**

| PK-furan | Copolymers | I_{NH2/di-CO} | X_{NH2} (%) | X_{CO} (%) |
|---|---|---|---|---|
| PK50f-1 | PK50 | 0.8 | 98 | 78 |
| PK50f-2 | PK50 | 0.6 | 100 | 60 |
| PK50f-3 | PK50 | 0.4 | 100 | 40 |
| PK50f-4 | PK50 | 0.2 | 100 | 20 |
| PK30f | PK30 | 0.8 | 75 | 60 |
| PK0f | PK0 | 0.8 | 62 | 50 |

### EXAMPLE 3 - Diels-Alder (DA) and Retro-Diels-Alder (RDA) reaction

The DA reaction of PK-furan (15 g) and 1,1'-(methylenedi-1,4-phenylene)bis-maleimide using chloroform (150 g) as diluent (10 wt% polymer based on diluent) was carried out in a 250 ml round bottom flask equipped with a magnetic stirrer. The gelation time was determined as the point at which the magnetic stirrer stopped to rotate. The cross-linked polymers were obtained by drying the polymer gel to constant weight at 50 °C under vacuum. The gel content was determined by Soxhlet extraction with boiling dichloromethane for 20 hours.

The cross-linking of PK-furan with 1,1'-(methylenedi-1,4-phenylene)bis-maleimide via the DA reaction was studied as a function of the initial molar ratio between the maleimide and furan groups (I_{ma/fur}), the degree of furan functionality on the polymer backbone, and the ethylene content of the copolymers (Table 2). The PK-furan derived from PK50 can easily be cross-linked with the bis-maleimide to form a gel, irrespective of I_{ma/fur} and the degree of furan functionality. The fastest gelation time was about 2 hours for PK50f-1 at I_{ma/fur}=1. It is worth noticing that the gelation time increases with decreasing the I_{ma/fur} and the degree of furan functionality. Regarding the effect of the ethylene content in the copolymers, the gelation time of PK50f is much shorter than that of PK30f and no gel formation was observed for PK0f even after the reaction time of 4 days. This discrepancy is believed to be due to the difference in molecular weight of the starting copolymers. With respect to gel content (corresponding to the number of cross-linking points) for all the studied samples, it is found that high gel contents (in the range of 92-95%) were obtained at high maleimide/furan ratios and a high degree of furan functionality, clearly indicating the high conversion level for the DA reaction.

**Table 2. Cross-linking of PK-furan with 1,1'-(methylenedi-1,4-phenylene)bis-maleimide via the DA reaction at the effect of maleimide/furan ratio (I_{ma/fur}), the degree of furan functionalization, and the ethylene content of the copolymers (reaction temperature 50 °C, reaction time 24 hours, polymer coding as in Table 1).**

| PK-furan | I_{ma/fur} | gelation time (h) | gel content (%) |
|---|---|---|---|
| PK50f-1 | 0.25 | 9 | 59 |
| PK50f-1 | 0.5 | 3 | 92 |
| PK50f-1 | 0.75 | 2.5 | 95 |
| PK50f-1 | 1 | 2.2 | 93 |
| PK50f-2 | 1 | 2.5 | 95 |
| PK50f-3 | 1 | 3 | 87 |
| PK50f-4 | 1 | 8.5 | 68 |
| PK30f | 1 | 4.5 | 87 |

### EXAMPLE 4 - Diels-Alder (DA) and Retro-Diels-Alder (RDA) reaction

The DA and RDA reaction of the polymer were performed in an NMR tube. PK-furan (25 mg) and 1,1'-(methylenedi-1,4-phenylene)bis-maleimide (21.5 mg) in equimolar ratio (between furan and maleimide groups) were dissolved in DMSO-*d*₆ (0.7 ml) and then transferred into an NMR tube. The reaction mixture was heated at 50 °C for 24 hours to form the polymer adduct. After the reaction, the NMR tube was immersed in a 150 °C oil bath for 5 minutes, followed by quenching in an ice-water bath. ¹H-NMR spectra were recorded instantly after quenching. For the cross-linked PK-furan after Soxhlet extraction and the removal of the diluent, the sample (50 mg) was added in DMSO-*d*₆ (0.7 ml) in a small glass vial and then heated at 150 °C in an oil bath for 5 minutes. After quenching in an ice-water bath, the completely dissolved polymer solution was transferred in an NMR tube and then ¹H-NMR spectra were instantly recorded.

The cycles of the DA and RDA reaction of PK-furan with 1,1'-(methylenedi-1,4-phenylene)bis-maleimide were investigated in DMSO diluent (10 wt% of PK-furan based on diluent) for PK50f-1 at I_{ma/fur}=1. The DA reaction occurred at low temperature and led to gel formation. The resulting polymer gels were completely reversed to clear and fluid solutions upon heating, which shows the same appearance as the starting mixture. Contrary to the results described in the open literature, the present DA and RDA reactions are characterised by ultra-fast kinetics (gel formation in 2 hours at 50 °C and its reversal in 5 minutes at 150 °C or in 10 minutes at 120 °C) which in turn can also be tuned by adjusting the maleimide to furan molar ratio. The cycle of gelation and its reversal was repeated 4 times without noticing any relevant changes in appearance, thus giving a clear preliminary indication that the PK-furan/bis-maleimide system is fully thermally reversible. The fast kinetics of the RDA reaction were further confirmed by the findings that the highly cross-linked polymers (PK50f-1 at I_{ma/fur}=1) after Soxhlet extraction and the removal of the diluent were insoluble in DMSO but converted back to a clear solution in less than 5 minutes upon heating.

¹H-NMR spectroscopy was used to study the DA reaction and the RDA reaction of PK-furan with the bis-maleimide. The results provide strong evidence of 100 % or full thermal reversibility of the cross-linked polymer systems. In addition, FTIR spectroscopy confirmed that the PK-furan can be repeatedly de-cross-linked and re-cross-linked with the bis-maleimide in the solid state by simple heating and cooling cycles.

### EXAMPLE 5 - Diels-Alder (DA) and Retro-Diels-Alder (RDA) reaction (according to the invention)

The fact that cross-linked PK-furan can be reshaped was demonstrated by compression moulding of small granules of the cross-linked PK-furan (obtained by shredding compression moulded bars) into uniform bars at elevated temperature (typically 110-150 °C, 10-30 minutes processing time). When exposed to heat, the polymers displayed the relevant properties of linear thermoplastics, such as remeltability, reprocessability, and recyclability, because of the opening of the DA adduct. After cooling to room temperature (30-40 minutes), a rigid structural polymer network could be obtained due to the regeneration of the DA adduct.

### EXAMPLE 6 - Diels-Alder (DA) and Retro-Diels-Alder (RDA) reaction

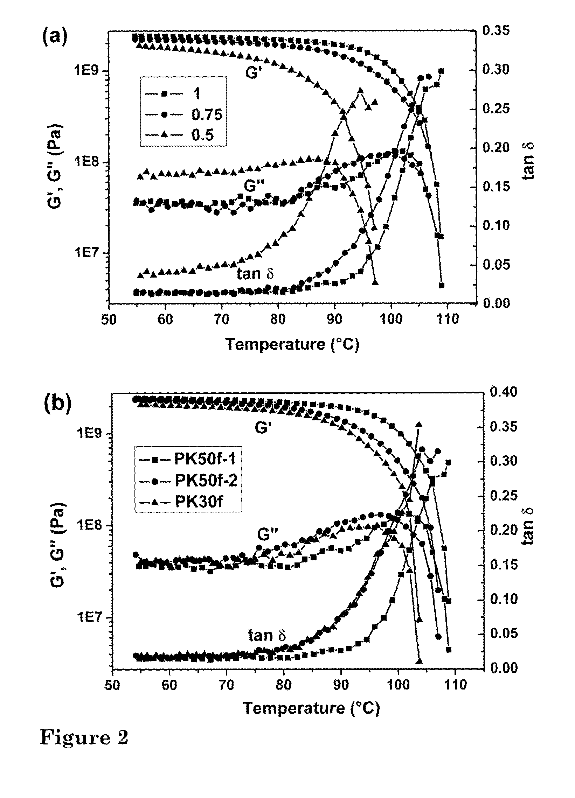

The thermal self-healing ability of the cross-linked PK-furan was studied by using dynamic mechanical analysis (DMA). Dynamic mechanical properties of the cross-linked PK-furan (storage modulus G', loss modulus G", tan δ versus temperature) are shown in Figure 2. It was observed that dynamic mechanical properties could be easily modulated by adjusting I_{ma/fur}. Figure 2a shows that there is a gradual increase of G' and a decrease of G" with the increase of I_{ma/fur} from 0.5 to 1 at the glassy state, indicating that the stiffness of the polymers increases with I_{ma/fur}. The shift of tan δ to a higher level with I_{ma/fur} also gave an indication of less damping characteristic or less flexibility at higher I_{ma/fur} values. The glass transition temperature (Tg), as determined from the inflection point of the G' curves, for the cross-linked PK50f-1 at I_{ma/fur} of 1, 0.75, and 0.5 were found to be around 100 °C, 96 °C, and 87 °C, respectively. Similar results were obtained when DMA was performed for samples with a relatively low degree of furan functionality (PK50f-2, PK30f) compared to PK50f-1 at I_{ma/fur} =1 (Figure 2b), where Tg values of 93 °C and 91 °C were obtained for PK50f-2 and PK30f, respectively.

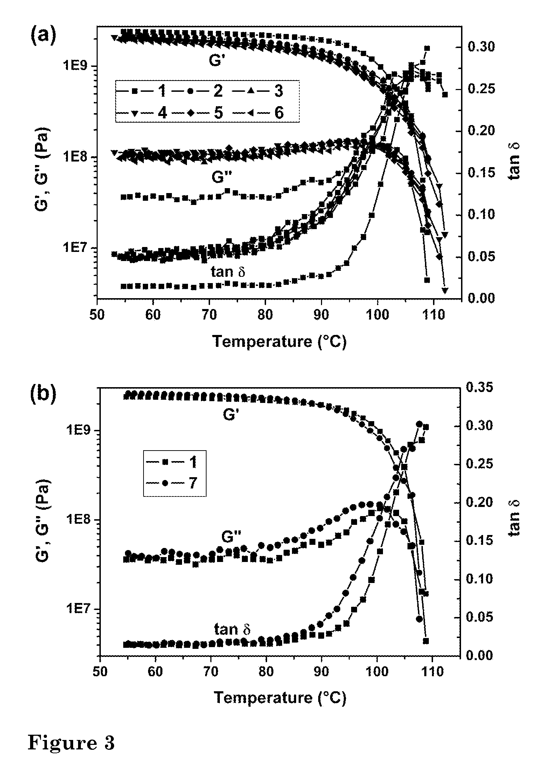

DMA was also performed in a cyclic manner to confirm the reworkability of the DA and RDA sequence on the sample PK50f-1 at I_{ma/fur}=1 (Figure 3). When reaching its glass transition temperature, the sample started to become soft due to the occurrence of the RDA reaction but it could still retain its original shape. Upon cooling down in 10 minutes, the G' and G" of the samples recovered due to the reformation of the DA adduct. The cycle was repeated sequentially for 6 times. Even without using stabilisers in the formulation, the dynamic mechanical properties of the tested sample (Figure 3a) remained almost unchanged after the repeated 6 cycles, although a small drop in Tg value of 3-4 degrees was observed after the first cycle. This effect could be attributed to the discrepancy in time scale between the measurement time of the DMA and the kinetics of the DA adduct formation. This was confirmed by the thermal treatment of the same 6-cycle sample at 50 °C for 24 hours in order to fully recover the DA adduct qualities. When testing again, the behaviour of cycle 7 (Figure 3b) almost matched that of cycle 1 in terms of the G', G", and tan δ, which proved that the present polymer system is 100% self-repairable under heat treatment.

### EXAMPLE 7 - Diels-Alder (DA) and Retro-Diels-Alder (RDA) reaction

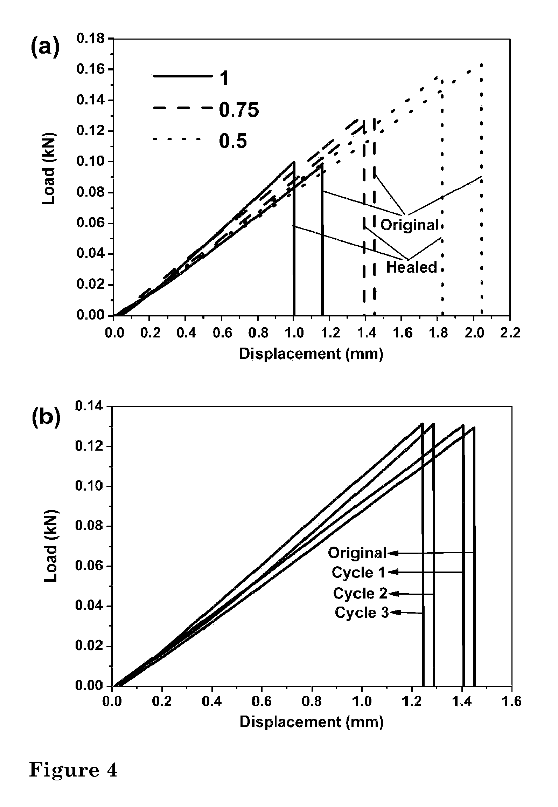

Cycles of DA and RDA reactions were studied by using a 3-point bending test at room temperature (23 °C). Representative "load to displacement" curves showed typical thermosetting mechanical behaviour (linear load to displacement relationship) of the prepared samples (PK50f-1 at I_{ma/fur} of 1, 0.75, and 0.5) (Figure 4). It was observed that a lower amount of bis-maleimide leads to a higher fracture load. After the bending test, the fractured samples were shredded into small granulates using a table-top hammer mill and then reshaped into rectangular bars by using compression moulding at 120 °C for 20 minutes. When testing the reshaped samples once again, a full recovery of the fracture load with a healing efficiency of 100% was achieved (Figure 4a). For similar systems known from the open literature, the recovery efficiency never reached a full completion and a relevant deterioration of the mechanical behaviour was found. SEM examination of the fracture surface of the original and healed samples after testing indicated that the polymers have the ability to recover to the original microstructure. Both fracture surfaces gave similar appearance (sharp, clear, and ligament shapes), which are typical for a brittle or thermosetting material. The healing performance was also evaluated for multiple cycles, indicating that the polymers, after 3 cycles, do display full recovery to the original fracture load (Figure 4b).

### EXAMPLES 8-12 - Diels-Alder (DA) and Retro-Diels-Alder (RDA) reaction

Examples 3-7 are repeated with the difference that N, N'-(1,3-phenylene)dimaleimide or re-mouldable cross-linked resins based on N, N'-(1,3-phenylene)dimaleimide are used instead of 1,1'-(methylenedi-1,4-phenylene)bis-maleimide or re-mouldable cross-linked resins based on 1,1'-(methylenedi-1,4-phenylene)bis-maleimide, respectively.

## Claims

1. A re-mouldable cross-linked resin comprising polymer chains which are connected to one another via Diels-Alder adducts obtainable from a dienophile and a substituted furan, wherein the substituted furan is obtainable by reacting an amino furan compound with a copolymer of carbon monoxide and an olefinically unsaturated compound.

2. Re-mouldable cross-linked resin according to claim 1, wherein the copolymer of carbon monoxide and an olefinically unsaturated compound is an alternating copolymer of carbon monoxide and an olefinically unsaturated compound which comprises one or more α-olefins.

3. Re-mouldable cross-linked resin according to claim 2, wherein the olefinically unsaturated compound is propene or a mixture of ethene and propene.

4. Re-mouldable cross-linked resin according to any one of claims 1-3, wherein the copolymer of carbon monoxide and an olefinically unsaturated compound has a number average molecular weight in the range of from 800 to 25,000.

5. Re-mouldable cross-linked resin according to claim 4, wherein the copolymer of carbon monoxide and an olefinically unsaturated compound has a number average molecular weight in the range of from 1,000 to 10,000.

6. Re-mouldable cross-linked resin according to any one of claims 1-5, wherein the amino furan compound is of the general formula
NH₂-A-F,
wherein A represents a connecting moiety being selected from alkylene groups and F represents a furan ring which may or may not be substituted with further substituents, with the further substituents, if any, being selected from alkoxy groups, alkyl groups, and silyl groups.

7. Re-mouldable cross-linked resin according to claim 6, wherein the amino furan compound is 2-(aminomethyl)-furan or 2-(2-aminoethyl)-furan.

8. Re-mouldable cross-linked resin according to any one of claims 1-7, wherein the dienophile comprises a but-2-ene-1,4-dione moiety included in a 5-or 6-membered ring.

9. A composition which is suitable for the preparation of a re-mouldable cross-linked resin, which composition comprises a dienophile cross-linking agent and a substituted furan, wherein the substituted furan is obtainable by reacting an amino furan compound with a copolymer of carbon monoxide and an olefinically unsaturated compound.

10. Composition according to claim 9, wherein the dienophile cross-linking agent is selected from compounds comprising a dienophile of the general formula 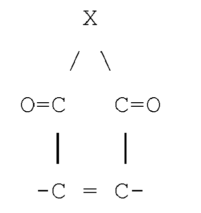 wherein X denotes O, S, N- or P-, and wherein at least one of the free valencies is occupied by a bridging group which connects the dienophile with another dienophile of said general formula, and the remaining free valencies, if any, are occupied by lower alkyl or acyl substituents, or hydrogen atoms.

11. Composition according to claim 10, wherein the bridging group is selected from groups containing a (nor)bornane skeleton in the bridge, 1,3-phenylene groups, 1,4-phenylene groups, and groups of the following formulae: -Φ-CH₂-Φ-, -Φ-O-Φ-O-Φ-, -Φ-O-Φ-SO₂-Φ-O-Φ-, - CH₂-O-CO-Φ-CO-O-CH₂-, and -Φ-C(CH₃)₂-Φ-, wherein -Φ- denotes, independently, a 1,3- or 1,4-phenylene group.

12. Composition according to claim 9, wherein the dienophile cross-linking agent is selected from the group consisting of bis-maleimides of hydrazine, 1,3-diaminobenzene, 2,4-diaminotoluene, bis(4-aminophenyl)methane, hexamethylenediamine, and dodecamethylenediamine.

13. Composition according to any one of claims 9-12, wherein the molar ratio of the furan rings to dienophiles is in the range of from 10:1 to 1:5.

14. A composition as claimed in claim 13, wherein the molar ratio of the furan rings to dienophiles is in the range of from 5:1 to 1:2.

15. A process for preparing a re-mouldable cross-linked resin, comprising reacting a dienophile cross-linking agent with a substituted furan, wherein the substituted furan is obtained by reacting an amino furan compound with a copolymer of carbon monoxide and an olefinically unsaturated compound.

16. A substituted furan which is obtainable by reacting an amino furan compound with a copolymer of carbon monoxide and an olefinically unsaturated compound.

17. A process for preparing a substituted furan, comprising reacting an amino furan compound with a copolymer of carbon monoxide and an olefinically unsaturated compound.

18. Process according to claim 17, wherein the reaction temperature is in the range of from 20 to 200 °C, and wherein the molar ratio of the copolymer and the amino furan compound is selected in the range of from 0.02 to 1, based on number of amino groups employed relative to the number of 1,4-dicarbonyl groups in the copolymer employed.

19. Process according to claim 18, wherein the reaction temperature is in the range of from 30 to 150 °C, and wherein the molar ratio of the copolymer and the amino furan compound is selected in the range of from 0.1 to 0.9, based on number of amino groups employed relative to the number of 1,4-dicarbonyl groups in the copolymer employed.

20. Process according to any one of claims 17-19, wherein the reaction is carried out in bulk.
